# EUROPÄISCHE PATENTSCHRIFT

(11) **EP 3 827 189 B1**
(45) Veröffentlichungstag und Bekanntmachung des Hinweises auf die Patenterteilung: **26.07.2023**
(21) Anmeldenummer: 20701601.5
(22) Anmeldetag: 22.01.2020
(51) Int. Cl.: F16K 7/14, F16K 1/36, F16K 41/10

(54) **ABSPERRMITTEL**
BLOCKING MEANS
MOYEN D'ARRÊT

(30) Priorität: 31.01.2019 DE 102019102445
(43) Veröffentlichungstag der Anmeldung: 02.06.2021
(73) Patentinhaber: GEMÜ Gebr. Müller Apparatebau GmbH & Co. Kommanditgesellschaft, 74653 Ingelfingen (DE)
(72) Erfinder: HAIDT, Harald, 74613 Oehringen (DE)
(74) Vertreter: DREISS Patentanwälte PartG mbB
(86) Internationale Anmeldenummer: PCT/EP2020/051496
(87) Internationale Veröffentlichungsnummer: WO 2020/156901

(56) Entgegenhaltungen:
- EP-A1- 3 287 679
- EP-A2- 2 283 763
- DE-A1-102008 055 097
- US-A- 1 779 503
- US-A- 2 743 738
- US-A- 4 359 204
- US-A1- 2010 140 528
- US-A1- 2015 115 191

## Beschreibung

Die Erfindung betrifft ein Absperrmittel für ein Sitzventil.

Absperrmittel für Sitzventile sind allgemein bekannt. Diese umfassen einen Schließabschnitt, welcher mit einem Ventilsitz des Sitzventils zusammenwirkt und einen Fluidstrom durch das Sitzventil begrenzt.

Des Weiteren sind sogenannte Plug-Diaphragma bekannt, welche mittels einer Membranwandung den Schließabschnitt mit einem Befestigungsabschnitt verbinden.

Auch Bodenablassventile sind bekannt.

Die Druckschrift US 2010/0140528 A1 offenbart eine Ventilanordnung zum Abdichten und Steuern einer Flüssigkeit, eines Gases oder trockenen Materials.

Aus Druckschrift EP 2 283 763 A2 ist wasserführendes Haushaltsgerät bekannt, in welchem ein Ventil angeordnet ist, dass ein verstellbares Ventilelement aufweist, das zum Öffnen und Schließen des Ventils mit einem Ventilsitz zusammenwirkt.

Die Druckschrift US 2015/0115191 A1 offenbart ein Membranventil, das die Probleme einer scheibenförmigen Membran lösen kann, bei der das Ausmaß an Verformung signifikant ist.

Weitere Ventile mit Membranen sind in den Druckschriften US 2 743 738 A, DE 10 2008 055 097 A1, US 1 779 503 A, US 4 359 204 A und EP 3 287 679 A1 offenabrt.

Mithin ist es Aufgabe der Erfindung, die bestehenden Absperrmittel für Sitzventile zu verbessern.

Die der Erfindung zugrunde liegende Aufgabe wird durch ein Absperrmittel gemäß dem Anspruch 1 gelöst. Vorteilhafte Weiterbildungen sind in den Unteransprüchen angegeben.

Ein erster Aspekt der Beschreibung betrifft ein Absperrmittel für ein Sitzventil, wobei das Absperrmittel umfasst: Einen lateralen Befestigungsabschnitt zur Festlegung des Absperrmittels zu einem Ventilkörper des Sitzventils, einen Schließabschnitt zum Zusammenwirken mit einem Ventilsitz des Sitzventils, und eine zu einer Längsachse des Absperrmittels rotationssymmetrisch ausgebildete Membranwandung, welche den Schließabschnitt mit dem Befestigungsabschnitt verbindet, wobei die Membranwandung in Übergangsbereichen, in welchen sich eine Krümmungsrichtung der Membranwandung ändert, in einem entspannten Zustand des Absperrmittels stets von Lotrechten der Längsachse abweichend verläuft. Des Weiteren umfasst das Absperrmittel: Einen dem lateralen Befestigungsabschnitt zugewandten und zu einer Trockenseite hin gewölbten ersten Wandungsverlauf, und einen sich in einem ersten der Übergangsbereiche an den ersten Wandungsverlauf in Richtung des Schließabschnitts anschließenden und zu einer Medienseite hin gewölbten zweiten Wandungsverlauf.

Da der Verlauf der Membranwandung in den Übergangsbereichen stets von Lotrechten der Längsachse abweicht, werden medienseitige Toträume vermieden. Es wird damit eine Abrollkontur geschaffen, die bei einer Deformation nicht abknickt und zerstört wird. Die rotationssymmetrische Ausbildung der Membranwandung ermöglicht, dass Dehnungen quer zur Längsachse des Absperrmittels reduziert werden und damit die Gefahr eines Bruches der Membranwandung reduziert wird.

Das Absperrmittel der Erfindung zeichnet sich dadurch aus, dass der erste Wandungsverlauf in einem Längsschnitt des Absperrmittels länger ist, insbesondere mindestens 2-mal länger ist, als der zweite Wandungsverlauf.

Vorteilhaft wird durch diesen längeren ersten Wandungsverlauf zum einen ein größerer Hub ermöglicht, zum anderen wird hierdurch der Schließabschnitt vom Befestigungsabschnitt weiter beabstandet. Weitergehend realisiert der im Schnitt längere erste Wandungsverlauf einen größeren, nassseitigen Radius, was mit einer größeren nassseitigen Kavität einhergeht, welche das Abflussverhalten des Prozessfluids verbessert.

In einem vorteilhaften Beispiel umfasst die Membranwandung: Einen sich in einem zweiten der Übergangsbereiche an den zweiten Wandungsverlauf in Richtung des Schließabschnitts anschließenden und zu einer Trockenseite hin gewölbten dritten Wandungsverlauf, wobei gedachte Tangenten des ersten und zweiten Übergangsbereichs in einem Längsschnitt des Absperrmittels und in einem entspannten Zustand des Absperrmittels einen trockenseitigen Winkel einschließen.

Vorteilhaft geben die unterschiedlichen Krümmungen des ersten und zweiten Wandungsverlaufs ein Bewegungsprofil der Membranwandung bei einer Bewegung des Schließabschnitts entlang der Längsachse vor. Durch den größeren Krümmungsgrad des ersten Wandungsverlaufs wird der mit dem Schließabschnitt mögliche Hub vergrößert. Mithin ist das Absperrmittel durch die konvex und konkav gekrümmten Wandungsverläufe beispielsweise so stauchbar, dass der Schließabschnitt eines normal geschlossenen Sitzventils vom Ventilsitz abhebt und die Membranwandung auch nach einer hohen Anzahl von Schaltwechseln nicht beschädigt wird.

Ein vorteilhaftes Beispiel zeichnet sich dadurch aus, dass die Membranwandung umfasst: Einen sich an den zweiten Wandungsverlauf in Richtung des Schließabschnitts anschließenden und zu der Trockenseite hin gewölbten dritten Wandungsverlauf, dessen Krümmungsgrad in dem Längsschnitt des Absperrmittels und bei einem entspannten Zustand des Absperrmittels kleiner ist als der Krümmungsgrad des ersten Wandungsverlaufs. Der dritte Wandungsverlauf stellt die Verbindung zu dem Schließabschnitt her. Des Weiteren stellt der dritte Verbindungsabschnitt einen kontinuierlichen Übergang zwischen dem zweiten Wandungsverlauf und einem angrenzenden Abschnitt bereit, sodass eine verschleißarme Anbindung bereitgestellt wird.

Ein vorteilhaftes Beispiel zeichnet sich dadurch aus, dass die Membranwandung sich aneinander anschließende Paare des zweiten und dritten Wandungsverlaufs umfasst.

Ein vorteilhaftes Beispiel zeichnet sich dadurch aus, dass ein vierter Wandungsverlauf zwischen dem ersten Wandungsverlauf und dem Befestigungsabschnitt angeordnet ist, und wobei eine medienseitige Oberfläche des vierten Wandungsverlaufs sich in dem Längsschnitt des Absperrmittels hin zu dem ersten Wandungsverlauf verjüngt. Der durch den vierten Wandungsverlauf geschaffene Bodenablassbereich ermöglicht, dass Prozessfluid bereits allein aufgrund der eigenen Gewichtskraft von dem Absperrmittel und damit aus dem Sitzventil abfließt.

Ein vorteilhaftes Beispiel zeichnet sich dadurch aus, dass eine gedachte Tangente eines Wendepunkts der Krümmungen zweier benachbarter der ersten, zweiten und dritten Wandungsverläufe im Längsschnitt des Absperrmittels und in einem entspannten Zustand des Absperrmittels einen ersten Winkel mit der Längsachse einschließen, welcher kleiner ist als ein zweiter Winkel, den eine gedachte Lotrechte zu der gedachten Tangente mit der Längsachse einschließt. Vorteilhaft wird damit eine Wandungsgeometrie geschaffen, welche die Bewegung der Membranwandung bei einer Bewegung des Schließabschnitts entlang einer Zustellachse klar vorgibt. Darüber hinaus wird eine stabile und verschleißarme Wandung bereitgestellt.

Ein vorteilhaftes Beispiel zeichnet sich dadurch aus, dass ein Material, aus dem das Absperrmittel gefertigt ist, einenElastizitätsmodul größer 300 MPa, insbesondere größer 400 MPa aufweist.

Ein vorteilhaftes Beispiel zeichnet sich dadurch aus, dass das Material des Absperrmittels ein Polyolefin, insbesondere Polytetrafluorethylen, PTFE, umfasst.

Ein zweiter Aspekt dieser Beschreibung betrifft ein Sitzventil mit einer Antriebsstange, welche zu einer Bewegung des Schließabschnitts entlang der Längsachse mit dem Schließabschnitt verbunden ist.

Ein vorteilhaftes Beispiel zeichnet sich dadurch aus, dass eine zu einem Ventilkörper feststehende, in dem Längsschnitt konkave Unterstützungskontur eine Öffnung, durch welche die Antriebsstange geführt ist, umgibt. Damit wird ermöglicht, dass der erste Wandungsverlauf in einem Zustand, in welchem der Schließabschnitt in Richtung Antrieb bewegt ist, an der feststehenden konkaven Unterstützungskontur anliegt. Wird die Antriebsstange beispielsweise in Richtung Antrieb zurückgezogen, so wird die Membranwandung gestaucht und der erste Wandungsverlauf liegt an der Unterstützungskontur an. Hierdurch wird eine Beschädigung des Absperrmittels im Bereich des ersten Wandungsverlaufs verhindert.

Ein vorteilhaftes Beispiel zeichnet sich dadurch aus, dass eine an der Antriebsstange angeordnete und damit gegenüber dem

Ventilkörper bewegliche konvexe Unterstützungskontur in eine trockenseitige Kavität der Membranwandung hineinragt.

In der Zeichnung zeigen:
- Figuren 1, 3 und 4: jeweils ein Absperrmittel in einem schematischen Längsschnitt; und
- Figur 2: ein Sitzventil mit dem darin angeordneten Absperrmittel.

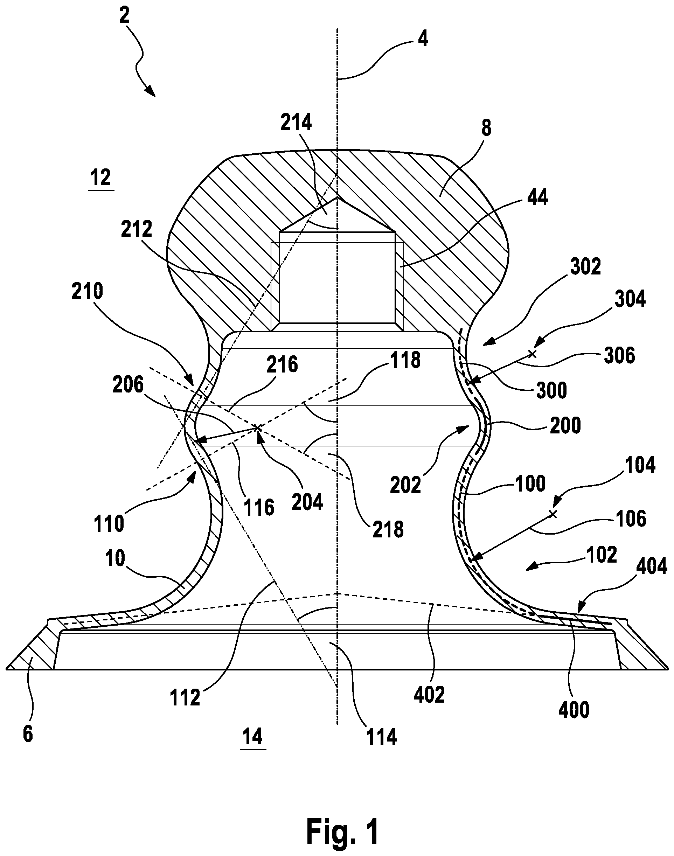

Figur 1 zeigt ein zu einer Längsachse 4 rotationssymmetrisch ausgebildetes einstückiges Absperrmittel 2 für ein Sitzventil. Das Absperrmittel 2 ist in einem entspannten Zustand gezeigt. Mittels eines lateralen, im Längsschnitt dreieckförmig ausgebildeten Befestigungsabschnitts 6 wird das Absperrmittel 2 zu einem Ventilkörper festgelegt. Insbesondere wird der Befestigungsabschnitt 6 verklemmt. Ein Schließabschnitt 8 wirkt mit einem Ventilsitz zusammen, um einen Strom eines Prozessfluids durch das Sitzventil zu begrenzen. Eine dünne Membranwandung 10 verbindet den Befestigungsabschnitt 6 mit dem entlang der Längsachse 4 beweglichen Schließabschnitt 8. Ist das Absperrmittel 2 innerhalb des Sitzventils angeordnet und mittels des lateralen Befestigungsabschnitts 6 zu dem Sitzventil festgelegt, so trennt das Absperrmittel 2 eine Medienseite 12 von einer Trockenseite 14.

Ein erster Wandungsverlauf 100 wölbt sich in Richtung der Trockenseite 14 und begrenzt damit eine medienseitige Kavität 102. Der erste Wandungsverlauf 100 folgt wenigstens abschnittsweise einem gedachten Torus, welcher durch Drehung eines Kreises mit einem medienseitigen Mittelpunkt 104 und einem Radius 106 um die Längsachse 4 erzeugt wird.

Ein zweiter Wandungsverlauf 200 wölbt sich in Richtung der Medienseite 12 und begrenzt damit eine trockenseitige Kavität 202. Der zweite Wandungsverlauf 200 folgt wenigstens abschnittsweise einem gedachten Torus, welcher durch Drehung eines Kreises mit einem trockenseitigen Mittelpunkt 204 und einem Radius 206 um die Längsachse 4 erzeugt wird.

Ein dritter Wandungsverlauf 300 wölbt sich in Richtung der Trockenseite 14 und begrenzt damit eine medienseitige Kavität 302. Der dritte Wandungsverlauf 300 folgt wenigstens abschnittsweise einem gedachten Torus, welcher durch Drehung eines Kreises mit einem medienseitigen Mittelpunkt 304 und einem Radius 306 um die Längsachse 4 erzeugt wird. Der dritte Wandungsverlauf 300 geht in den massiv ausgebildeten Schließabschnitt 8, welcher auch als Schließkörper bezeichenbar ist, über, wobei eine nicht gezeigte Tangente des dritten Wandungsverlaufs 300 in einem zugehörigen Übergangspunkt parallel zur Längsachse 4 verläuft.

Ein vierter Wandungsverlauf 400 schließt sich an den lateralen Befestigungsabschnitt an und folgt einem gedachten Flachkegel 402. Damit verjüngt sich der Wandungsverlauf 400 in Richtung des ersten Wandungsverlaufs 100 flachkegelförmig. Selbstverständlich sind auch andere Ausführungsformen des Wandungsverlaufs 400 denkbar. Beispielsweise kann der Wandungsverlauf 400 auch eine Wölbung in Richtung der Trockenseite 14 aufweisen. Eine medienseitige Oberfläche 404 des Wandungsverlaufs 400 stellt damit eine Ablaufgeometrie für das Prozessfluid bereit. Die Ablaufgeometrie für das Prozessfluid schließt sich nach innen an den lateralen Befestigungsabschnitt 6 an. Die Ablaufgeometrie für das Prozessfluid schließt sich nach außen an den ersten Wandungsverlauf 100 an. Mithin befindet sich die Ablaufgeometrie zwischen dem Befestigungsabschnitt 6 und dem ersten Wandungsverlauf 100.

Der erste Wandungsverlauf 100 des Absperrmittels 2 ist in dem entspannten Zustand des Absperrmittels 2 und in einem Längsschnitt länger als der zweite Wandungsverlauf 200. Insbesondere ist der erste Wandungsverlauf 100 mindestens doppelt so lang, insbesondere 2,5-mal so lang und insbesondere mindestens 3-mal so lang, wie der zweite Wandungsverlauf 200.

Der Radius 106 des ersten Wandungsverlaufs 100 ist in dem entspannten Zustand des Absperrmittels 2 größer als der Radius 206 des zweiten Wandungsverlaufs 200 und größer als der Radius 306 des dritten Wandungsverlaufs 300. Insbesondere ist der Radius 106 um 20 %, insbesondere um 30 %, insbesondere um 50 % größer als der Radius 206. Damit ist der Krümmungsgrad des zweiten Wandungsverlaufs 200 kleiner als ein Krümmungsgrad des ersten Wandungsverlaufs 100.

Die Radien 206 und 306 können gleich gewählt werden oder unterscheiden sich um maximal 20 %, insbesondere maximal 30 % voneinander.

In einem nicht gezeigten Beispiel umfasst das Absperrmittel 2 eine Anzahl von sich zu Medienseite 12 hin wölbenden Wandungsverläufen, welche sich ausgehend von dem ersten Wandungsverlauf 100 in Richtung des Schließabschnitts 8 aneinander anschließen. Folglich schließen sich Paare des zweiten und dritten Wandungsverlaufs 200 und 300 aneinander an.

In dem gezeigten Längsschnitt befindet sich ein Wendepunkt 110, 210 zwischen dem ersten Wandungsverlauf 100 und dem zweiten Wandungsverlauf 200 bzw. zwischen dem zweiten Wandungsverlauf 200 und dem dritten Wandungsverlauf 300. An dem Wendepunkt 110, 210 ändert sich die Krümmungsrichtung der Wandungsverläufe 100 und 200 bzw. 200 und 300. Eine gedachte Tangente 112, 212 durch den Wendepunkt 110, 210 schneidet die Längsachse 4 mit einem ersten Winkel 114, 214. Die ersten Winkel 114 und 214 sind gleich groß. Eine gedachte Lotrechte 116, 216 schneidet die Längsachse 4 in einem zweiten Winkel 118, 218. Die Winkel 118 und 218 sind gleich groß. Der erste Winkel 114, 214 ist kleiner als der zweite Winkel 118, 218.

Die Membranwandung 10 weist im Bereich der Wendepunkte 110, 210 eine erhöhte Wanddicke auf. Die Wanddicke verringert sich hin zu einem Mittelpunkt der jeweiligen Krümmung bzw. des jeweiligen Wandungsverlaufs 100, 200, 300.

Unabhängig von einer Verringerung oder Vergrößerung der Wanddicke ist die Membranwandung 10 im Allgemeinen wie folgt definiert. Die Membranwandung 10 trennt die Nassseite von der Trockenseite und verbindet den Befestigungsabschnitt 6 und den Schließabschnitt 8 durch wenigstens abschnittsweise äquidistant verlaufende Oberflächen. Das bedeutet, dass die nassseitige Oberfläche der Membranwandung 10 und die trockenseitige Oberfläche der Membranwandung 10 zwischen dem Befestigungsabschnitt 6 und dem Schließabschnitt 8 zumindest abschnittsweise äquidistant zueinander verlaufen.

Das Material des Absperrmittels 2 weist einen Elastizitätsmodul größer 300 MPa, insbesondere größer 400 MPa auf. Des Weiteren umfasst das Material des Absperrmittels 2 ein Polyolefin, insbesondere Polytetrafluorethylen, PTFE.

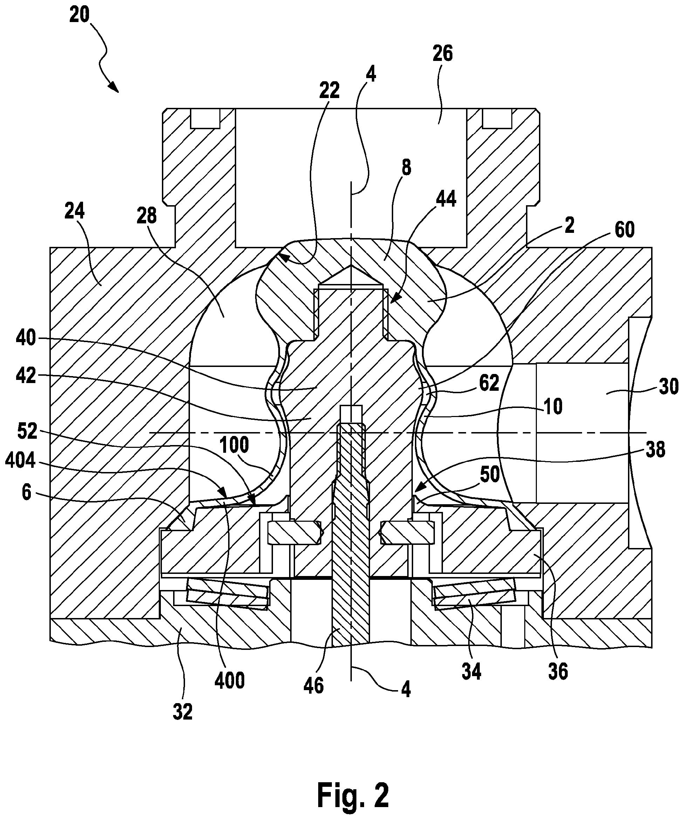

Figur 2 zeigt das in dem Sitzventil 20 angeordnete Absperrmittel 2. Ein Ventilsitz 22 des Ventilkörpers 24 trennt einen Zulauf 26 von einer Ventilkammer 28. Die Ventilkammer 28 mündet in einen Ablauf 30. Ein Verschlusselement 32 verschließt eine Montageöffnung des Ventilkörpers 24 und ist zu dem Ventilkörper 24 festgelegt. Ein Tellerfederpaket 34 stützt sich an dem Verschlusselement 32 ab und drückt einen Klemmkörper 36 in Richtung der Ventilkammer 28, um den Befestigungsabschnitt 6 zwischen dem Klemmkörper 36 und dem Ventilkörper 24 fluiddicht zu verklemmen.

Der Klemmkörper 36 umfasst eine Ventilkammer-seitige Öffnung 38, durch welche eine mit dem Schließabschnitt 8 verbundene Antriebsstange 40 geführt ist. Ein erster Abschnitt 42 der Antriebsstange 40 ist in einem trockenseitigen Befestigungsbereich 44 des Schließabschnitts 8 mit dem Absperrmittel 2 verbunden. Ein zweiter antriebsseitiger Abschnitt 46 der Antriebsstange 40 verbindet einen nicht gezeigten Antrieb mit dem ersten Abschnitt 42.

Die Ventilkammer-seitige Öffnung 38 ist von einer konkaven Unterstützungskontur 50 umgeben, welche zur Unterstützung des ersten Wandungsverlaufs 100 dient, wenn der Schließabschnitt 8 von dem Ventilsitz 22 in Richtung des Antriebs abhebt. Radial nach außen schließt sich eine kreisringförmige Oberfläche 52 an die konkave Unterstützungskontur 50 an, welche sich flachkegelförmig in Richtung der Unterstützungskontur 50 verjüngt. Damit kann der vierte Wandungsverlauf 400 so an der Oberfläche 52 anliegen, dass die Oberfläche 404 stets einen Abfluss von Fluid von der Längsachse 4 weg garantiert.

Der erste Abschnitt 42 der Antriebsstange 40 umfasst eine kreisringförmige, laterale und konvex ausgebildete Unterstützungskontur 60. Die Unterstützungskontur 60 ist zur Membranwandung 10 hin gewölbt. Die Unterstützungskontur 60 ragt in eine trockenseitige Kavität 62 der Membranwandung 10 hinein. Die Unterstützungskontur 60 sorgt für eine Abstützung der Membranwandung 10 in einem vom Ventilsitz 22 abgehobenen Zustand des Absperrmittels 2.

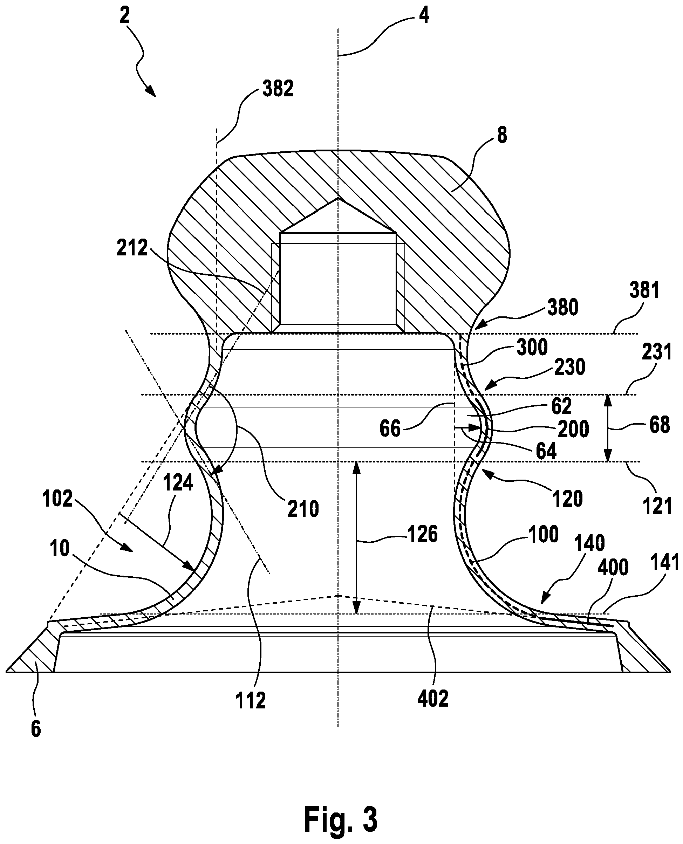

Figur 3 zeigt das Absperrmittel 2 aus Figur 1. In einem ersten Übergangsbereich 120 geht der erste Wandungsverlauf 100 in den zweiten Wandungsverlauf 200 über, wobei sich die Krümmungsrichtung der Membranwandung 10 im Längsschnitt ändert. In einem zweiten Übergangsbereich 230 geht der zweite Wandungsverlauf 200 in den dritten Wandungsverlauf 300 über, wobei sich die Krümmungsrichtung der Membranwandung 10 im Längsschnitt ändert. In einem dritten Übergangsbereich 380 geht der dritte Wandungsverlauf 300 in den Schließabschnitt 8 über, wobei eine gedachte Tangente 382 des dritten Wandungsverlaufs 300 in dem gezeigten Längsschnitt parallel zur Längsachse 4 des Absperrmittels 2 verläuft. In einem vierten Übergangsbereich 140 geht der erste Wandungsverlauf 100 in den vierten Wandungsverlauf 400 über.

Die gedachte Tangente 112 zwischen den Wandungsverläufen 200 und 300 verläuft in dem gezeigten Längsschnitt durch den Übergangsbereich 120 bzw. durch den Wendepunkt 110 in Figur 1. Die gedachte Tangente 212 verläuft durch den Übergangsbereich 230 bzw. durch den gedachten Wendepunkt 210 in Figur 1. Die Tangenten 112 und 212 schließen in dem gezeigten Längsschnitt einen trockenseitigen Winkel 210 ein, welcher vorliegend 120° entspricht. Bevorzugt liegt der trockenseitige Winkel 210 in einem Bereich zwischen 100° und 140°, insbesondere in einem Bereich zwischen 90° und 150°. Folglich ist der Winkel 210 wenigstens größer als 90°. Durch die jeweiligen Übergangsbereiche 120, 230, 380, 140 ist ein eine jeweilige Lotebene 121, 231, 381, 141 zur Längsachse 4 eingezeichnet.

Der zweite Wandungsverlauf 200 stellt die trockenseitige Kavität 62 mit einer maximalen Tiefe 64 bereit. Die Tiefe 64 ergibt sich im Längsschnitt lotrecht zu einer Geraden 66, welche eine Öffnung der Kavität 62 verschließt. Die Tiefe 64 ist kleiner als ein Abstand 68 der benachbarten Lotebenen 121 und 231. Insbesondere ist der Abstand 68 wenigstens doppelt so groß wie die Tiefe 64.

Der erste Wandungsverlauf 100 begrenzt abschnittsweise die Kavität 102 mit einer maximalen Tiefe 124, welche kleiner ist als ein Abstand 126 zwischen den Lotebenen 121 und 141.

Folglich verläuft in dem gezeigten Längsschnitt die Membranwandung 10 in sämtlichen Übergangsbereichen 120, 230, 380, 140, in welchen sich eine jeweilige Krümmungsrichtung der Membranwandung 10 ändert, in dem entspannten und damit nicht kraftbeaufschlagten Zustand des Absperrmittels 2 stets von Lotrechten der Längsachse 4 abweichend. Unter Lotrechten werden Ebenen und Geraden verstanden, welche lotrecht zur Längsachse 4 verlaufen.

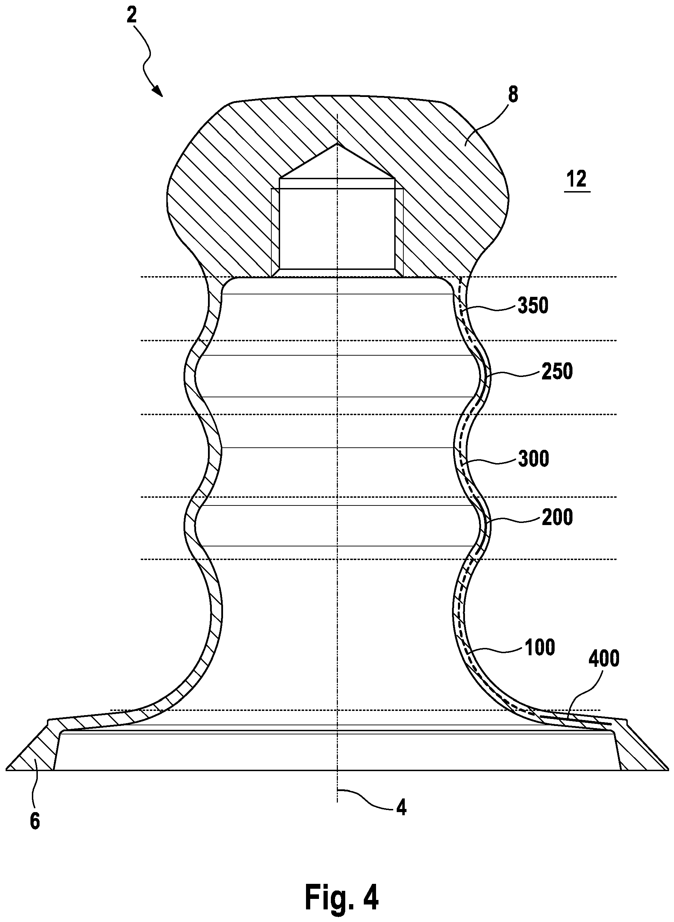

Figur 4 zeigt ein Beispiel des Absperrmittels 2, wobei im Unterschied zu den Figuren 1 und 3 der dritte Wandungsverlauf 300 in einen weiteren zweiten in Richtung des Schließabschnitts 8 angeordneten Wandungsverlauf 250 übergeht. Der weitere zweite Wandungsverlauf 250 ist in Richtung der Medienseite 12 gewölbt. An den weiteren zweiten Wandungsverlauf 250 schließt sich in Richtung des Schließabschnitts 8 ein weiterer dritter Wandungsverlauf 350 an, welcher in den Schließabschnitt 8 übergeht. Damit umfasst die Membranwandlung 10 sich aneinanderschließende Paare zweiter und dritter Wandungsverläufe 200, 300 und 250, 350. In einem nicht gezeigten Beispiel weist der Wandungsverlauf 100 einen ähnlichen Krümmungsgrad auf wie der dritte Wandungsverlauf 300.

## Patentansprüche

1. Ein Absperrmittel (2) für ein Sitzventil (20), wobei das Absperrmittel (2) umfasst:
einen lateralen Befestigungsabschnitt (6) zur Festlegung des Absperrmittels (2) zu einem Ventilkörper (24) des Sitzventils (20),
einen Schließabschnitt (8) zum Zusammenwirken mit einem Ventilsitz (22) des Sitzventils (20), und
eine zu einer Längsachse (4) des Absperrmittels (2) rotationssymmetrisch ausgebildete Membranwandung (10), welche den Schließabschnitt (8) mit dem Befestigungsabschnitt (6) verbindet, wobei die Membranwandung (10) in Übergangsbereichen (120, 230, 380, 140), in welchen sich eine Krümmungsrichtung der Membranwandung (10) ändert, in einem entspannten Zustand des Absperrmittels (2) stets von Lotrechten der Längsachse (4) abweichend verläuft, wobei die Membranwandung (10) einen dem lateralen
Befestigungsabschnitt (6) zugewandten und zu einer Trockenseite (14) hin gewölbten ersten Wandungsverlauf (100) umfasst, und wobei die Membranwandung (10) einen sich in einem ersten der Übergangsbereiche (120) an den ersten Wandungsverlauf (100) in Richtung des Schließabschnitts (8) anschließenden und zu einer Medienseite (12) hin gewölbten zweiten Wandungsverlauf (200) umfasst, **dadurch gekennzeichnet dass** der erste Wandungsverlauf (100) in
einem Längsschnitt des Absperrmittels (2) und in einem entspannten Zustand des Absperrmittels (2) länger, insbesondere mindestens zweimal länger, ist als der zweite Wandungsverlauf (200).

2. Das Absperrmittel (2) gemäß dem Anspruch 1, wobei die Membranwandung (10) umfasst:
einen sich in einem zweiten der Übergangsbereiche (230) an den zweiten Wandungsverlauf (200) in Richtung des Schließabschnitts (8) anschließenden und zu einer Trockenseite (14) hin gewölbten dritten Wandungsverlauf (300), wobei gedachte Tangenten (112, 212) des ersten und zweiten Übergangsbereichs (120, 230) in einem Längsschnitt des Absperrmittels (2) und in einem entspannten Zustand des Absperrmittels (2) einen trockenseitigen Winkel (210) einschließen.

3. Das Absperrmittel (2) gemäß dem Anspruch 2, wobei ein Krümmungsgrad des zweiten Wandungsverlaufs (200) in dem Längsschnitt des Absperrmittels (2) und bei einem entspannten Zustand des Absperrmittels (2) kleiner ist als ein Krümmungsgrad des ersten Wandungsverlaufs (100).

4. Das Absperrmittel (2) gemäß dem Anspruch 3, wobei die Membranwandung (10) umfasst:
einen sich an den zweiten Wandungsverlauf (200) in Richtung des Schließabschnitts (8) anschließenden und zu der Trockenseite (14) hin gewölbten dritten Wandungsverlauf (300), dessen Krümmungsgrad in dem Längsschnitt des Absperrmittels (2) und bei einem entspannten Zustand des Absperrmittels (2) kleiner ist als der Krümmungsgrad des ersten Wandungsverlaufs (100).

5. Das Absperrmittel (2) gemäß dem Anspruch 4, wobei die Membranwandung (10) sich aneinander anschließende Paare des zweiten und dritten Wandungsverlaufs (200, 300; 250, 350) umfasst.

6. Das Absperrmittel (2) gemäß einem der vorigen Ansprüche, wobei ein vierter Wandungsverlauf (400) zwischen dem ersten Wandungsverlauf (100) und dem Befestigungsabschnitt (6) angeordnet ist, und wobei eine medienseitige Oberfläche (404) des vierten Wandungsverlaufs (400) sich in dem Längsschnitt des Absperrmittels (2) hin zu dem ersten Wandungsverlauf (100) verjüngt.

7. Das Absperrmittel (2) gemäß einem der vorigen Ansprüche, wobei eine gedachte Tangente eines Wendepunkts (110; 210) der Krümmungen zweier benachbarter der ersten, zweiten und dritten Wandungsverläufe (100, 200, 300) in dem Längsschnitt des Absperrmittels (2) und in einem entspannten Zustand des Absperrmittels (2) einen ersten Winkel (114; 214) mit der Längsachse (4) einschließen, welcher kleiner ist als ein zweiter Winkel (118; 218), den eine gedachte Lotrechte (116; 216) zu der gedachten Tangente (110; 210) mit der Längsachse (4) einschließt.

8. Das Absperrmittel (2) gemäß einem der vorigen Ansprüche, wobei der trockenseitige Winkel (210) in einem Bereich zwischen 100° und 140°, insbesondere in einem Bereich zwischen 90° und 150°, liegt.

9. Das Absperrmittel (2) gemäß einem der vorigen Ansprüche, wobei der zweite Wandungsverlauf (200) eine trockenseitige Kavität (62) abschnittsweise begrenzt, und wobei eine maximale Tiefe (64) der trockenseitigen Kavität (62) in dem entspannten Zustand des Absperrmittels (2) kleiner ist als ein Abstand (68) der Übergangsbereiche (120, 230).

10. Das Absperrmittel (2) gemäß einem der vorstehenden Ansprüche, wobei ein Material, aus dem das Absperrmittel (2) gefertigt ist, einen Elastizitätsmodul größer 300 MPa, insbesondere größer 400 MPa aufweist.

11. Das Absperrmittel (2) gemäß einem der vorstehenden Ansprüche, wobei das Material des Absperrmittels ein Polyolefin, insbesondere Polytetrafluorethylen, PTFE, umfasst.

12. Ein Sitzventil (20) umfassend das Absperrmittel (2) gemäß einem der vorigen Ansprüche, wobei eine Antriebsstange (40) zu einer Bewegung des Schließabschnitts (8) mit dem Schließabschnitt (8) verbunden ist.

13. Das Sitzventil (20) gemäß dem Anspruch 12, wobei eine zu einem Ventilkörper (24) feststehende, in dem Längsschnitt konkave Unterstützungskontur (50) eine Öffnung (38), durch welche die Antriebsstange (40) geführt ist, umgibt.

14. Das Sitzventil gemäß dem Anspruch 12 oder 13, wobei eine an der Antriebsstange (40) angeordnete und damit gegenüber dem Ventilkörper (24) bewegliche konvexe Unterstützungskontur (60) in eine bzw. die trockenseitige Kavität (62) der Membranwandung (10) hineinragt.

## Claims

1. A shut-off means (2) for a seat valve (20), the shut-off means (2) comprising:
a lateral fastening portion (6) for securing the shut-off means (2) to a valve body (24) of the seat valve (20),
a closure portion (8) for interacting with a valve seat (22) of the seat valve (20), and
a diaphragm wall (10) which is rotationally symmetrical to a longitudinal axis (4) of the shut-off means (2) and connects the closure portion (8) to the fastening portion (6), wherein the diaphragm wall (10), in transition regions (120, 230, 380, 140) in which a direction of curvature of the diaphragm wall (10) changes, always deviates from perpendiculars of the longitudinal axis (4) in a relaxed state of the shut-off means (2), wherein the diaphragm wall (10) comprises a first wall profile (100) facing the lateral fastening portion (6) and curved towards a dry side (14), and wherein the diaphragm wall (10) comprises a second wall profile (200) which adjoins the first wall profile (100) in the direction of the closure portion (8) in a first of the transition regions (120) and which is curved towards a media side (12),
**characterized in that** the first wall profile (100) is longer than, in particular at least twice as long as, the second wall profile (200) in a longitudinal section of the shut-off means (2) and in a relaxed state of the shut-off means (2).

2. The shut-off means (2) according to claim 1, wherein the diaphragm wall (10) comprises:
a third wall profile (300) which adjoins the second wall profile (200) in the direction of the closure portion (8) in a second of the transition regions (230) and which is curved towards a dry side (14), wherein imaginary tangents (112, 212) of the first and the second transition region (120, 230) enclose a dry-side angle (210) in a longitudinal section of the shut-off means (2) and in a relaxed state of the shut-off means (2) .

3. The shut-off means (2) according to claim 2, wherein a degree of curvature of the second wall profile (200) is smaller than a degree of curvature of the first wall profile (100) in the longitudinal section of the shut-off means (2) and in a relaxed state of the shut-off means (2).

4. The shut-off means (2) according to claim 3, wherein the diaphragm wall (10) comprises:
a third wall profile (300) which adjoins the second wall profile (200) in the direction of the closure portion (8) and which is curved towards the dry side (14), the degree of curvature of the third wall profile being smaller than the degree of curvature of the first wall profile (100) in the longitudinal section of the shut-off means (2) and in a relaxed state of the shut-off means (2).

5. The shut-off means (2) according to claim 4, wherein the diaphragm wall (10) comprises mutually adjoining pairs of the second and third wall profile (200, 300; 250, 350).

6. The shut-off means (2) according to any of the preceding claims, wherein a fourth wall profile (400) is arranged between the first wall profile (100) and the fastening portion (6), and wherein a media-side surface (404) of the fourth wall profile (400) tapers in the longitudinal section of the shut-off means (2) towards the first wall profile (100).

7. The shut-off means (2) according to any of the preceding claims, wherein an imaginary tangent of an inflection point (110; 210) of the curvatures of two adjacent ones of the first, second and third wall profiles (100, 200, 300) in the longitudinal section of the shut-off means (2) and in a relaxed state of the shut-off means (2) encloses a first angle (114; 214) with the longitudinal axis (4) which is smaller than a second angle (118; 218) enclosed by an imaginary perpendicular (116; 216) to the imaginary tangent (110; 210) with the longitudinal axis (4).

8. The shut-off means (2) according to any of the preceding claims, wherein the dry-side angle (210) is in a range between 100° and 140°, in particular in a range between 90° and 150°.

9. The shut-off means (2) according to any of the preceding claims, wherein the second wall profile (200) delimits a dry-side cavity (62) in part, and wherein a maximum depth (64) of the dry-side cavity (62) in the relaxed state of the shut-off means (2) is smaller than a distance (68) between the transition regions (120, 230) .

10. The shut-off means (2) according to any of the preceding claims, wherein a material from which the shut-off means (2) is manufactured has a modulus of elasticity greater than 300 MPa, in particular greater than 400 MPa.

11. The shut-off means (2) according to any of the preceding claims, wherein the material of the shut-off means comprises a polyolefin, in particular polytetrafluoroethylene, PTFE.

12. A seat valve (20) comprising the shut-off means (2) according to any of the preceding claims, wherein a drive rod (40) is connected to the closure portion (8) to move the closure portion (8).

13. The seat valve (20) according to claim 12, wherein a support contour (50) which is fixed with respect to a valve body (24) and is concave in the longitudinal section surrounds an opening (38) through which the drive rod (40) is guided.

14. The seat valve according to claim 12 or 13, wherein a convex support contour (60) arranged on the drive rod (40) and movable therewith relative to the valve body (24) projects into a or the dry-side cavity (62) of the diaphragm wall (10).

## Revendications

1. Moyen d'arrêt (2) pour une soupape à siège (20), le moyen d'arrêt (2) comprenant:
une section de fixation latérale (6) destinée à immobiliser le moyen d'arrêt (2) par rapport à un corps de soupape (24) de la soupape à siège (20),
une section de fermeture (8) destinée à coopérer avec un siège de soupape (22) de la soupape à siège (20), et
une paroi de membrane (10) qui est réalisée à symétrie de révolution par rapport à un axe longitudinal (4) du moyen d'arrêt (2) et qui relie la section de fermeture (8) à la section de fixation (6), dans lequel, dans des zones de transition (120, 230, 380, 140) dans lesquelles une direction de courbure de la paroi de membrane (10) change, la paroi de membrane (10) s'étend toujours en déviant de perpendiculaires de l'axe longitudinal (4) lorsque le moyen d'arrêt (2) est en un état détendu, dans lequel la paroi de membrane (10) comprend une première allure de paroi (100) montrant vers la section de fixation latérale (6) et bombée en direction d'un côté sec (14), et dans lequel la paroi de membrane (10) comprend une deuxième allure de paroi (200) qui est contiguë, dans une première des zones de transition (120), à la première allure de paroi (100) en direction de la section de fermeture (8) et est bombée en direction d'un côté de milieu (12),
**caractérisé par le fait que**, en une coupe longitudinale du moyen d'arrêt (2) et dans un état détendu du moyen d'arrêt (2), la première allure de paroi (100) est plus longue, en particulier au moins deux fois plus longue que la deuxième allure de paroi.

2. Moyen d'arrêt (2) selon la revendication 1, dans lequel la paroi de membrane (10) comprend:
une troisième allure de paroi (300) qui est contiguë, dans une deuxième des zones de transition (230), à la deuxième allure de paroi (200) en direction de la section de fermeture (8) et est bombée en direction d'un côté sec (14), dans lequel des tangentes imaginaires (112, 212) des première et deuxième zones de transition (120, 230) incluent un angle côté sec (210) en une coupe longitudinale du moyen d'arrêt (2) et dans un état détendu du moyen d'arrêt (2).

3. Moyen d'arrêt (2) selon la revendication 2, dans lequel, en coupe longitudinale du moyen d'arrêt (2) et dans un état détendu du moyen d'arrêt (2), un degré de courbure de la deuxième allure de paroi (200) est inférieur à un degré de courbure de la première allure de paroi (100).

4. Moyen d'arrêt (2) selon la revendication 3, dans lequel la paroi de membrane (10) comprend:
une troisième allure de paroi (300) qui est contiguë à la deuxième allure de paroi (200) en direction de la section de fermeture (8) et est bombée en direction du côté sec (14) et dont le degré de courbure est inférieur au degré de courbure de la première allure de paroi (100) en coupe longitudinale du moyen d'arrêt (2) et dans un état détendu du moyen d'arrêt (2).

5. Moyen d'arrêt (2) selon la revendication 4, dans lequel la paroi de membrane (10) comprend des paires contiguës des deuxième et troisième allures de paroi (200, 300; 250, 350).

6. Moyen d'arrêt (2) selon l'une quelconque des revendications précédentes, dans lequel une quatrième allure de paroi (400) est agencée entre la première allure de paroi (100) et la section de fixation (6), et dans lequel une surface côté milieu (404) de la quatrième allure de paroi (400) se rétrécit en coupe longitudinale du moyen d'arrêt (2) en direction de la première allure de paroi (100).

7. Moyen d'arrêt (2) selon l'une quelconque des revendications précédentes, dans lequel, en coupe longitudinale du moyen d'arrêt (2) et dans un état détendu du moyen d'arrêt (2), une tangente imaginaire d'un point de retournement (110; 210) des courbures de deux allures de paroi voisines des première, deuxième et troisième allures de paroi (100, 200, 300) inclut avec l'axe longitudinal (4) un premier angle (114; 214) qui est inférieur à un deuxième angle (118; 218) inclus par une perpendiculaire imaginaire (116; 216) à la tangente imaginaire (110; 210) et l'axe longitudinal (4) .

8. Moyen d'arrêt (2) selon l'une quelconque des revendications précédentes, dans lequel l'angle côté sec (210) se situe dans une plage comprise entre 100° et 140°, en particulier dans une plage comprise entre 90° et 150°.

9. Moyen d'arrêt (2) selon l'une quelconque des revendications précédentes, dans lequel la deuxième allure de paroi (200) délimite par sections une cavité côté sec (62), et dans lequel une profondeur maximale (64) de ladite cavité côté sec (62) est inférieure à une distance (68) des zones de transition (120, 230) à l'état détendu du moyen d'arrêt (2).

10. Moyen d'arrêt (2) selon l'une quelconque des revendications précédentes, dans lequel un matériau à partir duquel le moyen d'arrêt (2) est réalisé présente un module d'élasticité qui est supérieur à 300 MPa, en particulier supérieur à 400 MPa.

11. Moyen d'arrêt (2) selon l'une quelconque des revendications précédentes, dans lequel le matériau du moyen d'arrêt comprend une polyoléfine, en particulier du polytétrafluoroéthylène, PTFE.

12. Soupape à siège (20) comprenant le moyen d'arrêt (2) selon l'une quelconque des revendications précédentes, dans laquelle une tige d'entraînement (40) est reliée à la section de fermeture (8) pour un mouvement de la section de fermeture (8).

13. Soupape à siège (20) selon la revendication 12, dans laquelle un contour de support (50) qui est fixe par rapport à un corps de soupape (24) et est concave en coupe longitudinale entoure une ouverture (38) à travers laquelle est guidée la tige d'entraînement (40) .

14. Soupape à siège selon la revendication 12 ou 13, dans laquelle un contour de support (60) convexe qui est agencé sur la tige d'entraînement (40) et est donc mobile par rapport au corps de soupape (24) fait saillie dans une ou bien la cavité côté sec (62) de la paroi de membrane (10).
